# EUROPEAN PATENT SPECIFICATION

(11) **EP 0 792 295 B1**
(45) Date of publication and mention of the grant of the patent: **02.06.1999**
(21) Application number: 95938446.2
(22) Date of filing: 13.11.1995
(51) Int. Cl.: C08F 2/60, C08G 67/02

(54) **A CROSS-LINKED RESIN**
VERNETZTES HARZ
RESINE RETICULEE

(30) Priority: 15.11.1994 EP 94203331; 17.02.1995 EP 95200391
(43) Date of publication of application: 03.09.1997
(73) Proprietor: SHELL INTERNATIONALE RESEARCH MAATSCHAPPIJ B.V., 2596 HR Den Haag (NL)
(72) Inventor: MEURS, Jan, Hermen, Hendrik, NL-1031 CM Amsterdam (NL)
(86) International application number: EP9504488
(87) International publication number: WO9615159

(56) References cited:
- EP-A- 0 114 091
- EP-A- 0 334 454
- EP-A- 0 372 602
- FR-A- 2 288 765
- US-A- 3 979 373
- US-A- 4 656 235
- US-A- 5 270 413
- CHEMICAL ABSTRACTS, vol. 88, no. 12, 20 March 1978 Columbus, Ohio, US; abstract no. 74889k, 'POLYMERIZABLE AROMATIC OLIGOIMIDES' page 25; column 2; & SU,A,584 014 (INSTITUTE OF CHEMICAL PHYSICS, ACADEMY OF SCIENCES, U.S.S.R.) 15 December 1977

## Description

This patent application relates to a re-mouldable cross-linked resin which comprises polymer chains which are connected to one another via Diels-Alder adducts.

Conventional thermoset resin compositions are generally low-molecular weight compounds which are converted into a cross-linked high-molecular weight resin by a curing reaction. Conventional thermoset resins are widely used in view of their generally advantageous properties, such as the easy mouldability into shaped objects of the resins in the uncured state and the high strength and rigidity of the resins after the curing. On the other hand, as the curing reactions are irreversible, the conventional thermoset resins can not be re-moulded once they have been cured. This implies that they lack recycleability, which is increasingly felt as a disadvantage.

S.A. Canary et al. (J. Polym. Sci. Part A: Polym. Chem. 30 (1992) p. 1755) disclosed cross-linked resins comprising polymer chains which are connected to one another via Diels-Alder adducts obtainable from a furfural derivative as a diene and a maleimide as a dienophile. The Diels-Alder adducts are formed from the diene and the dienophile and reverse to the diene and the dienophile when the resins are heated at an elevated temperature. Hence, upon heating at elevated temperature the cross-links disappear, allowing the resin to be re-moulded into a shaped object, so that these cross-linked resins could in principle combine recycleability with the advantageous properties of the conventional thermoset resins. However, from the experimental details provided it would appear that the cross-linking reaction and the reverse reaction and, as the authors noted themselves, also the stability of the furfuryl group cast doubt on the practicability of the furfuryl based cross-linked resin.

Similar cross-linked resins, based on Diels-Alder adducts of (2-furyl)-2-ethyl groups and maleimide groups attached to a polymer back-bone, have been disclosed by Y. Chujo et al. (Macromolecules 23 (1990) p. 2636).

Cross-linked resins based on furfuryl groups attached to a polymer back-bone and a bis-maleimide cross-linking agent have been disclosed in DE-A-4104319. It appears that the resins of this reference need a relatively high temperature for (re)moulding. In the light of the above teaching that furfuryl groups have a relatively low stability, it would be desirable that the resins could be processed at a lower temperature.

Further, US-A-4,656,235 relates to siloxane-containing polyimide polymers made via intermolecular polymerization of bis-maleimide dienophiles and siloxane-containing bis-furan dienes, followed by aromatization of the intermediate Diels-Alder adduct.

The present invention provides a practicable reversible cross-linking system based on a 2,5-dialkyl substituted furan and a dienophile. It has been found that the Diels-Alder adducts based on a 2,5-dialkyl substituted furan and a dienophile undergo the reverse reaction at a suitably lower temperature than similar Diels Alder adducts based on a furfuryl compound. Furthermore, the invented cross-linking system is fasL in the cross-linking (i.e. curing) reaction and in the reverse reaction and the invented re-mouldable cross-linked resin can be re-moulded several times without a substantial change in mechanical properties. The resins of this invention can have an attractively low or an attractively high glass transition temperature and they can have outstanding mechanical properties, such as a high mechanical strength and stiffness (e.g. E-modulus) or, alternatively, a high flexibility.

The invention therefore relates to a cross-linked resin of which the cross-linking can be reversed by heating at elevated temperature, which resin comprises polymer chains which are connected to one another via Diels-Alder adducts obtainable from a dienophile and a diene, the latter being a 2,5-dialkyl substituted furan. Resin of which the cross-linking can be reversed by heating at elevated temperature will hereinafter be called re-mouldable resin.

There may be several ways by which the polymer chains of the invented re-mouldable cross-linked resin can be connected to one another via Diels-Alder adducts. In one embodiment of this invention the 2,5-dialkyl substituted furan groups from which the Diels-Alder adducts are obtainable are attached to or form part of the polymer chains and use is made of a cross-linking agent which comprises in its molecular structure two or more dienophiles from which the Diels-Alder adducts are obtainable. It will be clear that these dienophiles are connected to each other by chemical bonds or by bridging groups. Accordingly, the present invention relates also to a composition which is suitable for the preparation of a re-mouldable cross-linked resin which composition comprises a polymer which contains moieties of a 2,5-dialkyl substituted furan and a cross-linking agent which contains two or more dienophiles in its molecular structure.

Conversely, the dienophiles may also be attached to or form part of the polymer chains and use is made of a cross-linking agent which comprises in its molecular structure two or more 2,5-dialkyl substituted furan groups. Therefore, the present invention relates also to a composition which is suitable for the preparation of a re-mouldable cross-linked resin which composition comprises a polymer which contains moieties of a dienophile and a cross-linking agent which contains two or more 2,5-dialkyl substituted furans in its molecular structure.

In yet another embodiment of this invention the dienophile is attached to the polymer chains to which also the 2,5-dialkyl substituted furan groups are attached or which contain the 2,5-dialkyl substituted furan groups as a part of their polymer chains. Accordingly, the present invention relates also to a polymer which is suitable for the preparation of a re-mouldable cross-linked resin which polymer contains moieties of a 2,5-dialkyl substituted furan and moieties of a dienophile.

EP-A-372602 discloses a resin which is obtainable by reacting an epoxide with a Diels-Alder adduct of a polymeric 2,5-dialkyl furan and maleic anhydride. The reaction of this Diels-Alder adduct with an epoxide opens the cyclic anhydride of the Diels-Alder adduct and renders thereby the Diels-Alder adduct thermally labile, such that the latter decomposes rapidly to yield the polymeric 2,5-dialkyl furan and maleic acid esters. Hence, the resin composition disclosed in EP-A-372602 is not a re-mouldable cross-linked resin as now invented.

The 2,5-dialkyl substituted furans from which the Diels-Alder adducts according to this invention are obtainable may or may not be substituted an their 3-and 4-positions. Preferred substituents are for example alkyl or alkyloxy groups, typically having up to 10 carbon atoms, such as methyl, ethyl, 1-propyl, methoxy and 1-hexyloxy groups.

As indicated hereinbefore, the 2,5-dialkyl substituted furans from which the Diels-Alder adducts are obtainable may be present as groups attached to the polymer chains of the polymer(s) on which the re-mouldable cross-linked resin of this invention is based. They may be attached thereto directly via a chemical bond or via a divalent organic bridging group for which any of the substituents of the furans or the 3- or 4-positions of the furans may function as the point of attachment. The alkyl substituents at the 2- and 5-positions of the furans may be the same or different and will typically have up to 10 carbon atoms. Examples of suitable alkyl groups are methyl, ethyl, 2-propyl and 1-hexyl groups. Examples of suitable furyl groups which can be attached to a polymer chain are 2,5-dimethylfur-3-yl, 2,5-diethyl-3-methylfur-4-yl, 5-ethylfurfuryl or 5-(1-butyl)furfuryl groups.

On the nature of said divalent bridging group there will be further elaboration hereinafter.

The type of polymer chains to which the 2,5-dialkyl substituted furans may be attached is not critical. Suitably the polymer chains are chains of a polyolefin, such as polyethene, polypropene, polystyrene, poly(acrylic acid) or a copolymer of ethene and acrylic acid or ester, chains of random or alternating copolymers of carbon monoxide and olefinically unsaturated compounds (for a further elaboration on such copolymers cf. hereinafter), or chains which contain heteroatoms, such as chains of polyamide or polyester.

It is preferred that the 2,5-dialkyl substituted furans form a structural element of the polymer back-bone itself. In such a case it is particularly preferred that each of the 2,5-dialkyl substituents of the furans are alkylene groups which also form part of the polymer chain and which may or may not be substituted. Such a constellation can easily be accomplished by furanizing copolymers of carbon monoxide and olefinically unsaturated compounds which contain 1,4-dicarbonyl entities in their polymer chains, i.e. by converting such 1,4-dicarbonyl entities into furan moieties.

Copolymers of carbon monoxide and olefinically unsaturated compounds which contain 1,4-dicarbonyl entities in their polymer chains are known per se. They can be prepared by palladium catalysed polymerization using the methods known from, for example, EP-A-121965, EP-A-181014, EP-A-322018, EP-A-372602 and EP-A-516238. The polymers so prepared are alternating copolymers of carbon monoxide and the olefinically unsaturated compounds, i.e. copolymers of which the polymer chains contain the monomer units originating in carbon monoxide (i.e. carbonyl groups) and the monomer units originating in the olefinically unsaturated compounds in an alternating arrangement, so that every fourth carbon atom of the polymer chain belongs to a carbonyl group. The molecular weight of the copolymer can suitably be varied by varying the polymerisation temperature, viz. -copolymers with a relatively low molecular weight are prepared at a relatively high temperature. Some polymerisation catalysts allow the formation of polymers of which a part of the carbonyl groups is converted into furan groups. Alternative copolymers of carbon monoxide and olefinically unsaturated compounds which contain 1,4-dicarbonyl entities may be random copolymers, i.e. copolymers of which the polymer chains contain said monomer units in a random order. The latter copolymers can be prepared by radical initiated polymerization using the methods known from, e.g., US-A-2495286 and US-A-4024326.

The furanization of the copolymer of carbon monoxide and olefinically unsaturated compounds may be effected by methods known in the art, for example, by applying phosphorus pentoxide as dehydrating agent, as disclosed by A. Sen et al. (J. Polym. Science, Part A. Polym. Chem. 32 (1994) p. 841), or by heating in the presence of a strong acid, such as p-toluenesulphonic acid, as disclosed in US-A-3979373. These methods allow the conversion of 1,4-dicarbonyl moieties in the polymer chains into furan moieties at a variable conversion level, dependent of the reaction conditions employed. By routine experimentation the skilled person will be able to identify suitable reaction conditions.

It is preferred to employ in the furanization an alternating copolymer of carbon monoxide and olefinically unsaturated compounds because of its higher content of carbonyl groups in the polymer back-bone so that the furanization can be accomplished efficiently at a high level of incorporation of furan groups. If, nevertheless, a low degree of furanization is desired, the conversion of carbonyl groups into furan groups may be kept low, in which case the presence of unconverted carbonyl groups may contribute advantageously to the mechanical properties of the re-mouldable cross-linked resin.

The said copolymers of carbon monoxide and olefinically unsaturated compounds may be based on hydrocarbons as the olefinically unsaturated compounds, but the olefinically unsaturated compounds may also contain heteroatoms, such as in vinyl acetate, methyl vinyl ether, ethyl acrylate and N-vinylpyrrolidone. It is preferred that the copolymer is based on an olefinically unsaturated hydrocarbon, suitably an α-olefin, in particular an α-olefin having up to 10 carbon atoms. Very suitable are aliphatic α-olefins, in particular those having from 3 to 6 carbon atoms and more in particular those having a straight carbon chain, such as propene, 1-butene, 1-pentene and 1-hexene. Propene is most preferred.

It is clear that the type of olefinically unsaturated compound incorporated will determine which substituents may be present at the 3- or 4-positions of the 2,5-dialkyl substituted furans introduced in a furanization reaction. When the copolymer of carbon monoxide and olefinically unsaturated compounds is an alternating copolymer of carbon monoxide and an α-olefin having more than three carbon atoms the α-olefin may be incorporated in the copolymer in a regio-irregular fashion or in a regioregular fashion. It may be preferred that the α-olefin(s) having more than three carbon atoms is/are incorporated in a regio-irregular fashion because this may effect a lower viscosity of the (furanized) copolymer. It may also be preferred to have the α-olefin incorporated in a regioregular fashion, notably in a head-to-tail fashion, typically such that the α-olefin is incorporated for more than 80%, in particular for more than 90%, in a regioregular fashion. This will effect that the furan groups introduced in the furanization reaction have the same or virtually the same steric and electronic environment so that these furan groups are more uniform in reactivity in the Diels-Alder reaction and in the reverse reaction than when the olefinically unsaturated compounds are incorporated in a regio-irregular fashion. This is in particular the case when the copolymer is based on carbon monoxide and a single olefinically unsaturated compound. It is not critical whether or not the α-olefin(s) having more than three carbon atoms is/are incorporated in the copolymer in a stereoregular manner. Good results can be obtained with atactic copolymers.

Very good results can be obtained with a furanized regioregular atactic linear alternating copolymer of carbon monoxide with propene wherein the propene is incorporated for more than 90% in a head-to-tail fashion and with a furanized regio-irregular linear alternating copolymer of carbon monoxide with propene.

The precise nature of the dienophile from which the Diels-Alder adduct is obtainable is not critical, as long as the Diels-Alder adduct has such a thermal stability that the cross-linked resin is re-mouldable. The skilled person will be able to determine by routine experimentation whether or not a dienophile will meet the criterion of re-mouldability, in particular in respect of the temperature range he wishes to apply in re-moulding the cross-linked resin. Usually the minimum temperature above which the re-mouldable cross-linked resin will be re-moulded depends on the maximum temperature requirements for the end-use application of the re-mouldable cross-linked resin, or vice versa. The re-moulding is suitable carried out at a temperature above 80 °C, more preferably above 110 °C, in particular above 140 °C. For reasons of cost-effectiveness and practical processing it is desired that the temperature at which the re-moulding takes place is, for example, below 300 °C, in particular below 250 °C, more in particular below 220 °C.

Suitable dienophiles are, for example, alkynes having electron withdrawing groups attached to both sides of the ethyne moiety, such as ester and keto groups. Examples are mono- and diesters of butynedioic acid (i.e. acetylenedicarboxylic acid) and substituted but-2-yne-1,4-diones. Other suitable dienophiles are compounds which contain a but-2-ene-1,4-dione moiety included in a 5- or 6-membered ring, in particular compounds of the general formula 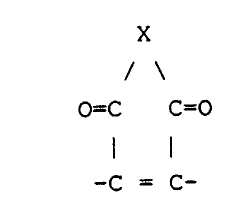 wherein X denotes O, S, N- or P-, wherein at least one of the free valencies is occupied by a bridging group which connects the dienophile with one of the polymer chains or with another dienophile, and wherein the remaining valencies, if any, are occupied by lower alkyl or acyl substituents or, preferably, hydrogen. The nature of the said bridging group will be elaborated further hereinafter. The lower alkyl substituents suitably contain up to 4 carbon atoms and are, for example, methyl or ethyl groups. Dienophiles of this general formula are preferably cyclic derivatives of maleic anhydride and, in particular, maleimide (i.e. X denotes O or, in particular, N-).

As indicated hereinbefore, in one embodiment of this invention use is made of a cross-linking agent which comprises in its molecular structure two or more dienophiles from which the Diels-Alder adducts are obtainable. A practicable maximum of the number of dienophiles in the molecular structure is typically 20, more typically 10. In said cross-linking agent the dienophiles may be connected to each other by one or more bridging groups. For example, four dienophiles may be connected to one another by a quadrivalent bridging group. The more dienophiles in the molecular structure, the higher the glass transition temperature of the re-mouldable cross-linked resin will be. However, it may be sufficient and more simple that a cross-linking agent is used in which there are two or three dienophiles in the molecular structure, in particular maleimido groups, which dienophiles may be connected to one another by bi- or trivalent bridging groups. Dienophiles may also be connected to one another by chemical bonds.

Both the molecular weight and the chemical nature of the bridging group of the cross-linking agent may be varied to a large extent. It has been found that such variations of the cross-linking agent lead to re-mouldable cross-linked resins covering a wide range of mechanical properties. The bridging group may be organic and it may contain only carbon atoms in the bridge but it is also possible that it contains also, or exclusively heteroatoms in the bridge, such as oxygen, silicon or nitrogen atoms. The bridging group may be flexible or rigid.

For example, polymeric bridging groups having flexible polymer chains, such as poly(alkylene oxide) or polysiloxanes, having a number average molecular weight of, say, more than 300, provide rubbery re-mouldable cross-linked resins. When the polymeric flexible chain has a number average molecular weight in the range of 1,500-10,000 or more re-mouldable cross-linked resins may be obtained which resemble thermoplastic rubbers in their properties, such as having a low glass transition temperature, for example below 0 °C, typically down to -45 °C or even down to -60 °C.

Accordingly, suitable cross-linking agents of this kind are maleimido capped poly(alkylene oxide)s, such as poly(ethylene oxide)s or poly(propylene oxide)s, and maleimido capped polysiloxanes, for example bis-maleimides of polysiloxanes, such as those which may be represented by the general formula H₂N-CH₂[-O-SiR₂]ₙ-O-CH₂-NH₂, wherein n is an integer, on average, of more than 10 and in particular in the range of 20-70, and each R is independently an alkyl group, in particular having up to 5 carbon atoms, preferably a methyl group. Very good results can be obtained with the tris- and bis-maleimides of tris- and bis-amino capped poly(alkylene oxide)s, in particular the amino capped poly(alkylene oxide)s having a number average molecular weight of at least 300, preferably in the range of 1,500-10,000, more preferably in the range of 1,500-5,000.

Low-molecular weight bridging groups, i.e. bridging groups which may have a molecular weight or a number average molecular weight, for example, below 500, in particular below 300, or which may have up to 20 carbon atoms in each of the connecting bridges, may also be used. Cycloaliphatic and aromatic bridging groups render the bridging groups rigid and tend to provide re-mouldable cross-linked resins which are relatively hard and strong, and have a relatively high glass transition temperature. Examples of bivalent cycloaliphatic and aromatic low-molecular weight bridging groups are groups containing a (nor)bornane skeleton in the bridge, 1,3-phenylene groups and groups of the following formulae: -φ-CH₂-φ-, -φ-O-φ-O-φ-, -φ-O-φ-SO₂-φ-O-φ-, -CH₂-O-CO-φ-CO-O-CH₂- and -φ-C(CH₃)₂-φ-, wherein -φ- denotes a 1,4-phenyiene group. Other suitable bivalent bridging groups are non-cyclic aliphatic (alkylene) and oxycarbonyl (ester) groups and combinations thereof. Suitable cross-linking agents are, for example, the bis-maleimides of hydrazine, 2,4-diaminotoluene, hexamethylenediamine, dodecamethylenediamine, diamines of the general formula 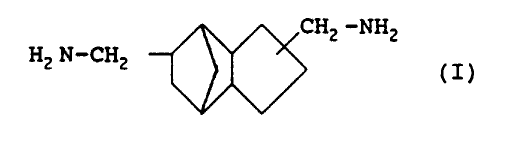 and bis-amino capped (poly)siloxanes of low molecular weight, such as (poly)siloxanes of the general formula H₂N-CH₂[-O-SiR₂]ₙ-O-CH₂-NH₂, wherein n ranges, on average, from 1 to 10, preferably from 1 to 5 and the groups R are preferably methyl groups. An isomer mixture of the diamines of formula I is commercially available from HOECHST. Trivalent bridging groups may be of a similar nature as indicated above for bivalent bridging groups. Very good results can be obtained with bis(4-maleimidophenyl)methane, 2,4-dimaleimidotoluene, tris(maleimidomethyl) 1,3,5-benzenetricarboxylate and dimethyl-bis[(N-maleimidomethyl)oxy]silane.

Suitable cross-linking agents on the basis of maleic anhydride are for example compounds of the general formula 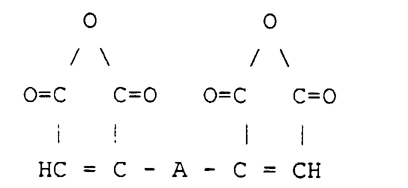 wherein A denotes a bridging group as described hereinbefore, in particular bridging group having up to 20 carbon atoms in the bridge. More in particular the bridging group A is a bivalent hydrocarbyl group, in particular an alkylene group, such as a hexamethylene group, or groups -D-O-CO- or -CO-O-D-O-CO- wherein D denotes a bivalent hydrocarbyl group, for example an alkylene group, such as a hexamethylene group.

Again other suitable cross-linking agents are polyesters based on butynedioic acid and a diol, such as ethylene glycol, a poly(ethylene glycol), propylene glycol or a poly(propylene glycol). These polyesters may be low molecular weight cross-linking agents, such as described hereinbefore, or they may have a number average molecular weight of, for example, more than 400, such as in the range of 2.000-6.000.

The present invention also relates to cross-linking agents per se, viz. to the maleimido capped poly(alkylene oxide)s mentioned hereinbefore, and to maleimido capped (poly)siloxanes, in particular bis-maleimides of (poly)siloxanes of the general formula H₂N-CH₂[-O-SiR₂]ₙ-O-CH₂-NH₂, wherein n is an integer of at least 1 and each R is independently an alkyl group, in particular having up to 5 carbon atoms, preferably a methyl group. The bis-maleimido capped (poly)siloxanes can be prepared by N-hydroxymethylation of maleimide with formaldehyde and subsequent reaction with the appropriate dichlorodialkylsilane in the presence of base and water using generally known methods.

As stated hereinbefore, in certain embodiments of this invention a cross-linking agent is employed which comprises in its molecular structure two cr more 2,5-dialkyl furan moieties. In this cross-linking agent the 2,5-dialkyl substituted furan groups are suitably connected to one another via a chemical bond or via a bridging group. A practicable maximum of the number of 2,5-dialkyl furan moieties in the molecular structure is typically 20, more typically 10. The nature of this bridging group is generally the same as the bridging group of the cross-linking agents which comprise two or more dienophiles, as described hereinbefore. Examples of suitable cross-linking agents are bis(5-ethylfurfuryl) adipate and the bis-amides of (5-ethylfurfuryl)oxyacetic acid and the diamines mentioned in the preceding paragraphs.

As indicated hereinbefore, in certain embodiments of this invention use is made of a polymer which contains moieties of a dienophile, or 2,5-dialkyl substituted furan moieties and moieties of a dienophile. These moieties may be connected to the polymer chains by means of a chemical bond or by means of a bridging group. This bridging group may be of the same type as the bridging groups of the cross-linking agents which comprise two or more dienophiles as described hereinbefore. Examples may be given as follows. When the polymer is a polystyrene, maleimide, as the dienophile, may be attached thereto by tin(IV)chloride catalysed alkylation of the polystyrene with N-chloromethylmaleimide, and when the polymer is a (styrene/maleic anhydride)copolymer a 5-ethylfurfuryl group may be attached thereto by esterifying the (styrene/maleic anhydride)copolymer with 5-ethylfurfuryl alcohol in pyridine. When the polymer is a copolymer of carbon monoxide and olefinically unsaturated compounds which contains 1,4-dicarbonyl entities in their polymer chains 2,5-dialkylfurans and dienophiles may be attached thereto by reacting the copolymer with an appropriately substituted primary hydrocarbylamine, e.g., using the methods known from US-A-3979374. In this reaction 1,4-dicarbonyl entities are converted into pyrrole entities which form part of the polymer chain and which are N-substituted with the substituted hydrocarbyl group. For example, a copolymer of carbon monoxide and olefinically unsaturated compounds which contains 1,4-dicarbonyl entities may be reacted with the mono-amide of maleic acid and hexamethylenediamine or with the mono-amide of maleic acid and bis(4-aminophenyl)methane, followed by ring closure of the acid-amido moieties to maleimide moieties. This will yield a polymer having N-(6-maleimidohexyl)pyrrole or N-{4-[(4'-maleimidophenyl)methyl]phenyl}pyrrole entities in the polymer chain. When it is desired to use a polymer which contains 2,5-dialkyl substituted furan moieties and moieties of a dienophile it is eligible to convert a part of the 1,4-dicarbonyl entities of a copolymer of carbon monoxide and olefinically unsaturated compounds into furan moieties and another part (or the remainder) of the 1,4-dicarbonyl entities into N-substituted pyrrole entities, of which the N-substituent contains a dienophile.

The molecular weight of the polymer(s) on which the re-mouldable cross-linked resin of this invention is/are based may very between wide limits. Suitable molecular weight ranges may be selected according to the type of application and the method of (re-)moulding of the cross-linked resin envisaged. A low viscosity is very advantageous when reinforced or filled composites, in particular glass reinforced composites, are prepared, in view of a good wetting of the reinforcement or the filler. A low viscosity is also very advantageous, for example, when the resin is used for moulding objects with an intricate shape cr when it is used as a coating material. In such cases the viscosity of the resin, measured at 190 °C, is typically lower than 1000 mPa.s and typically higher than 1 mPa.s, preferably in the range of 5-500 mPa.s and in particular in the range of 10-100 mPa.s. A low viscosity during the (re-)moulding can be accomplished e.g. by selecting a polymer with a low molecular weight, and by selecting a low molecular weight cross-linking agent, if any is used. Good results have been obtained with a polymer having a number average molecular weight in the range of 500-100,000, preferably in the range of 1,000-25,000, in particular in the range of 2,000-10,000. For (co)extrusion and injection moulding purposes it may be desirable to apply a resin composition which has a viscosity during the processing, measured at 190 °C, higher than 10 Pa.s, preferably in the range of 50-2,000 Pa.s, in particular in the range of 100-1,000 Pa.s.

The quantity of Diels-Alder adducts present in the re-mouldable cross-linked resin of this invention depends on the quantity of 2,5-dialkyl furan groups and the quantity of the dienophile present in the composition from which the Diels-Alder adducts are formed. The skilled person will appreciate that a certain minimum quantity of Diels-Alder adducts is needed to be present to effect that the cross-linked resin is a solid material below the temperature at which the Diels-Alder adducts reverse to the 2,5-dialkyl substituted furan and the dienophile. It will also be appreciated that this minimum quantity depends on the molecular weight and the type of the polymer on which the resin is based and, if any cross-linking agent is used, on the number of dienophiles or 2,5-dialkyl furan groups per molecule (i.e. functionality) of the cross-linking agent. A lower molecular weight of the polymer will effect that a higher quantity of Diels-Alder adducts is needed. The number of a Diels-Alder adducts may be lower when a cross-linking agent is used which has a higher functionality. Generally good results can be achieved by using a polymer having a number average molecular weight of above 1000, which contains on average at least 4 2,5-dialkyl substituted furan groups per molecule. Preferably a polymer is used which has a number average molecular weight of above 1500, in particular above 2000, and which contains on average at least 1.5, more preferably at least 2.5, and in particular at least 3, 2,5-dialkyl substituted furan groups per molecule. The molar ratio of the 2,5-dialkyl substituted furan groups to dienophiles amounts typically from 20:1 to 1:4, more typically from 10:1 to 1:2, preferably from 5:1 to 1:1.5, more preferably 5:1 to 1:1.

As indicated hereinbefore, reinforcements and (conductive) fillers may be present in the re-mouldable cross-linked resins of this invention, for example up to 40% by weight relative to the weight of the resulting composition. Other compounds which may be present are for example radical scavengers, such as phenolic antioxidants and hydroquinones, weakly acidic stabilising systems, such as buffers having a pH range of 2-7 (when measured in water at 20 °C), UV stabilisers, processing aids, such as release agents, and pigments. Said weakly acidic stabilising systems, in particular acids having a pKa in the range of 2-7, preferably 2-5 (when measured in water at 20 °C), such as carboxylic acids having typically up to 20 carbon atoms, have been found to be very suitable for stabilising the furanized copolymer cf carbon monoxide and olefinically unsaturated compounds. The invention also relates to such stabilised compositions. Examples of suitable stabilising carboxylic acids are acetic acid and 2-ethylhexanecarboxylic acid. The quantity of the weakly acidic stabilising system may vary between wide limits. Suitably a quantity of 0.01-10% by weight, in particular 0.05-5% by weight, relative to the weight of the furanized copolymer may be used. Hydroquinones have been found to be very suitable for stabilizing maleimides.

The re-mouldable cross-linked resin of this invention can be prepared, for example, by mixing the appropriate components at ambient temperature, heating the obtained mixture and moulding into the desired shape. This preparation may conveniently be carried out in an extruder. The components may be fed as a mixture to the extruder. Some or all components may also be fed separately, in particular when one component is a liquid and another component is a solid. By feeding a solid component (or component mixture) at a point which is positioned up-stream to the point of feeding a liquid component (or component mixture) the solid may be molten at the point where it is mixed with the liquid.

For re-moulding of the resin it is generally sufficient to bring the resin at a temperature sufficiently high to convert it into a liquid, to mould the obtained liquid into the desired shape and to cool to a temperature which is sufficiently low to solidify the resin. The present invention also relates to such a re-moulding process.

Suitable moulding and re-moulding techniques include extrusion, coextrusion (in particular of a soft material upon a hard material), injection moulding, resin transfer moulding, filament winding, pultrusion and spraying. The resins can very suitably be applied in high-speed moulding processes. Repairing of mouldings and welding can, very advantageously, be accomplished in an analogous manner. The time needed to convert the cross-linked resin into a liquid and vice versa is generally short. Frequently this time is shorter than the time needed for the transfer of the heat of reaction.

The ingredients needed to prepare the re-mouldable cross-linked resin of this invention can conveniently be stored, handled and used in the form of a kit of parts. A first part of such a kit comprises a polymer which contains moieties of a 2,5-dialkyl substituted furan and a second part of the kit comprises a cross-linking agent which contains two or more dienophiles in its molecular structure. Alternatively, such a kit may comprise a first part comprising a polymer which contains moieties of a dienophile and a second part comprising a cross-linking agent which contains two or more 2,5-dialkyl substituted furans in its molecular structure. The present invention also relates to such kits of parts.

It is also conceivable that, depending on the physical properties of the components, mixing of the components at room temperature yields a storage-stable heterogeneous mixture of the polymer and the cross-linking agent.

The re-mouldable cross-linked resin of this invention can be used in applications in which conventional thermoset resins are used, for example as a pre-preg, a sheet moulding compound or a bulk moulding compound. Further applications are conceivable, for example, as temporary mould or structure such as a removable kernel in foundries, in disposable goods, as ink or toner, as a (conductive) solder, as a repair material, in coating (in particular seamless high-gloss coating), in thermoreversible gels, as processing aid such as in poly(vinyl chloride), as adhesive, in bitumen, as (rigid) foam, as electrical isolation material and as fusible joint or sealant such as in safety devices.

The invention is further illustrated by means of the following examples. ¹H-NMR and ¹³C-NMR analysis were carried in deuterochloroform as solvent. The chemical shifts are specified relative to tetramethylsilane. The Shore-A hardness (soft materials) and the Shore-D hardness (hard materials) were determined using a FRANK (trademark) apparatus according to the procedures of DIN 53505 (30 seconds, 20 °C).

### Example 1

A regioregular atactic linear alternating carbon monoxide/propene copolymer was prepared by copolymerizing carbon monoxide with propene in the presence of a catalyst system based on palladium acetate, cobalt perchlorate, 1,3-bis(diethylphosphino)propane and naphthoquinone.

The product was furanized by treating it with p-toluenesulphonic acid in acetic anhydride. The polymer was worked-up by extracting a solution of the polymer in dichloromethane consecutively with aqueous sodium bicarbonate, aqueous acetic acid and water.

The polymer obtained had a number average molecular weight of 1000 and 55% of the carbonyl groups was converted into furan groups.

### Example 2

The procedures of Example 1 were repeated with small modifications.

A polymer was obtained having a number average molecular weight of 7700 and of which 27% of the carbonyl groups was converted into furan groups.

### Example 3

A regio-irregular linear alternating carbon monoxide/propene copolymer was prepared by copolymerizing carbon monoxide with propene in the presence of a catalyst system based on palladium acetate, cobalt perchlorate, 1,3-bis[bis(2-methoxyphenyl)phosphino]propane and naphthoquinone.

The product was furanized by treating it with p-toluenesulphonic acid in acetic anhydride.

The polymer obtained had a number average molecular weight of 8500 and 47% of the carbonyl groups was converted into furan groups.

### Example 4

A bis-maleimido capped poly(propene oxide) was prepared as follows.

A solution of maleic anhydride (11.0 g, 0.11 mole) in 50 ml N,N-dimethylformamide (DMF) was added at room temperature to a stirred solution of 20 g of a bis-amino capped poly(propene oxide) having a molecular weight of about 400 (available under the trademark JEFFAMINE D400) in 250 ml DMF within a period of 1 hour. Stirring was continued overnight. Sodium carbonate (5.3 g, 0.05 mole) was added. The DMF diluent was removed by vacuum flash distillation. Acetic anhydride (40 ml) was added to the residue. The resulting mixture was stirred at 140 °C for 2 hour. The reaction mixture with worked-up by flashing off the volatiles in vacuum, subsequent extraction using dichloromethane, diethylether and water, and evaporating the organic extract to dryness. The product exhibited ¹H-NMR signals at 6.58, 4.25, 3.78 and 0.95-1.30 ppm.

### Example 5

Dimethyl-bis[(N-maleimidomethyl)oxy]silane was prepared as follows.

A mixture of 9.8 g (0.1 mole) maleimide, 9 ml 37% aqueous formaldehyde and 40 mg sodium carbonate was stirred at room temperature for 1 hour. The mixture was diluted with 30 ml water and the crystals formed (9.1 g N-hydroxymethylmaleimide) were collected by filtration.

A mixture of 2.5 g (20 mmole) N-hydroxymethylmaleimide and 1.6 g (20 mmole) pyridine in 50 ml dichloromethane was stirred at room temperature. Dimethylsilyldichloride (1.29 g, 10 mmole) was slowly added and stirring was continued for 20 minutes. The reaction mixture was extracted with water. The organic layer was stirred with 5 g of silica gel and filtered. The filtrate was evaporated to dryness, yielding 2.1 g of nearly colourless product (mp. 65 °C). The product exhibited ¹H-NMR signals at 0.17 ppm, 5.08 ppm and 6.73 ppm, and ¹³C-NMR signals at 3.10 ppm, 60.08 ppm, 134.58 ppm and 169.78 ppm.

### Example 6

A cross-linked re-mouldable resin was prepared as follows.

An intimate mixture of 4 g of the furanized copolymer of Example 1 and 6 g of the bis-maleimide of Example 4 was prepared by stirring a mixture of the components at 20 °C. The mixture was placed in a mould and left overnight at ambient temperature.

A rubbery resin moulding was obtained which had a Shore-A hardness of 29.

The moulding was cut into small pieces and heated at 150 °C for 5 minutes. The liquid thus formed was placed in a mould and cooled to 20 °C within a period of 3 minutes. The moulding obtained had a Shore-A hardness of 30.

### Example 7

A cross-linked re-mouldable resin was prepared as follows.

An intimate mixture of 12 g of the furanized copolymer of Example 1, 6 g of bis(4-maleimidophenyl)methane and 0.05 ml acetic acid, as stabiliser, was prepared by stirring a mixture of the components at 150 °C. A part of the mixture was poured into a mould (2 x 10 x 50 mm) and the remainder was poured into a cylindrical mould. The contents of both moulds were cooled to 20 °C within a period of 3 minutes.

The cylindrical moulding had a Shore-D hardness of 83. The moulding was milled to a fine powder. The powder was heated to 150 °C to obtain a liquid, which was subsequently poured into a cylindrical mould and cooled to 20 °C within a period of 3 minutes. The moulding obtained was subjected again to the same sequence of milling, heating and cooling. The moulding finally obtained had a Shore-D hardness of 83.

The 2 x 10 x 50 mm moulding was tested by Dynamic Mechanical Analysis (DMA, heating rate 2 °C/minute). Upon temperature increase it was found that the modulus at 108 °C was 50% of the modulus at 25 °C. Above 115 °C the stiffness of the sample was negligible.

### Example 8

A cross-linked re-mouldable resin was prepared as follows.

An intimate mixture of 16 g of the furanized copolymer of Example 1 and 4 g of bis(4-maleimidophenyl)methane was prepared by stirring a mixture of the components at 150 °C. The mixture was poured into a mould and cooled to 20 °C within a period of 3 minutes.

A solid, hard material was obtained.

### Example 9

A cross-linked re-mouldable resin was prepared as follows.

An intimate mixture of 5.5 g of the furanized copolymer of Example 3 and 0.3 g of dimethyl-bis[(N-maleimidomethyl)oxy]silane of Example 5 was prepared by stirring a mixture of the components at 150 °C. The mixture was poured into a cylindrical mould. The moulding was cooled to 20 °C within a period of 5 minutes.

A soft moulding was obtained which had a Shore-A hardness of 39.

### Example 10

A cross-linked re-mouldable resin was prepared as follows.

An intimate mixture of 4.5 g of the furanized copolymer of Example 3 and 0.5 g of bis(4-maleimidophenyl)methane was prepared by stirring a mixture of the components at 150 °C. The mixture was poured into a cylindrical mould. The moulding was cooled to 20 °C within a period of 5 minutes.

A tough moulding was obtained which had a Shore-A hardness of 86.

### Example 11

A cross-linked re-mouldable resin was prepared as follows.

An intimate mixture of 1.8 g of the furanized copolymer of Example 3 and 0.45 g of bis(4-maleimidophenyl)methane was prepared by stirring a mixture of the components at 165 °C. The mixture was poured into a cylindrical mould. The moulding was cooled to 20 °C within a period of 5 minutes.

A moulding was obtained which had a Shore-D hardness cf 83.

The moulding was cut into small pieces and heated at a temperature of 165 °C for 10 minutes. The liquid thus obtained was poured into a mould and cooled to 20 °C in 5 minutes. The moulding obtained had a Shore-D hardness of 84. This moulding was subjected to the same sequence of cutting, heating and cooling. The mould finally obtained had a Shore-D hardness of 88.

### Example 12

A cross-linked re-mouldable resin was prepared as follows.

An intimate mixture of 4.5 g of the furanized copolymer of Example 2 and 0.5 g of bis(4-maleimidophenyl)methane was prepared by stirring a mixture of the components at 150 °C. The mixture was poured into a mould. The moulding was cooled to 20 °C within a period of 5 minutes.

A hard moulding was obtained.

### Example 13

A cross-linked re-mouldable resin was prepared as follows.

A furanized regio-irregular linear alternating copolymer of carbon monoxide and propene was prepared by the procedures of Example 3, but using modified reaction conditions. The polymer obtained had a number average molecular weight of 4500 and 17% of the carbonyl groups was converted into furan groups.

A sample of the polymer was mixed with such a quantity of 2,4-dimaleimidotoluene that the molar ratio of the 2,5-dialkylfuran groups to the maleimido groups was 1:1. The mixture was heated until it was a liquid and then allowed to cool in a mould. The Shore-D hardness of the moulding was 61.

### Example 14

Cross-linked re-mouldable resins were prepared as follows.

A furanized regio-irregular linear alternating copolymer of carbon monoxide and propene was prepared by the procedures of Example 3, but using modified reaction conditions. The polymer obtained had a number average molecular weight of 1170 and 48% of the carbonyl groups was converted into furan groups. 2-Ethylhexanecarboxylic acid was added as stabiliser.

A sample of the polymer was mixed with such a quantity of 2,4-dimaleimidotoluene that the molar ratio of the 2,5-dialkylfuran groups to the maleimido groups was 1:1. The mixture was heated until it was a liquid and then allowed to cool in a mould. A solid moulding was obtained. The melting point of the product, measured by means of a melting point microscope, was 114 °C.

Another sample of the polymer was mixed with such a quantity of tris (maleimidomethyl) 1,3,5-benzenetricarboxylate that the molar ratio of the 2,5-dialkylfuran groups to the maleimido groups was 1:1. The mixture was heated until it was a liquid and then allowed to cool in a mould. A solid moulding was obtained. The melting point of the product, measured by means of a melting point microscope, was 130 °C, instead of 114 °C. The 16 °C higher melting point is indicative for an about 16 °C higher glass transition temperature.

### Example 15

Cross-linked re-mouldable resins were prepared as follows.

A furanized regio-irregular linear alternating copolymer of carbon monoxide and propene was prepared by the procedures of Example 3, but using modified reaction conditions. The polymer obtained had a number average molecular weight of 1770 and 27% of the carbonyl groups was converted into furan groups.

The procedure of Example 4 was repeated with the difference that the poly(propene oxide) with a molecular weight of about 400 was replaced by an equimolar amount of a bis-amino capped poly(propene oxide) having a molecular weight of about 2000 (available under the trademark JEFFAMINE D2000).

A sample of the furanized polymer was mixed at 40 °C with such a quantity of the so-obtained bis-maleimido capped poly(propene oxide) that the molar ratio of the 2,5-dialkylfuran groups to the maleimido groups was 1:1. The liquid mixture was poured into a mould and allowed to stand overnight. A rubber product was obtained. In DMA (heating rate 2 °C/minute) it showed an onset temperature of the glass transition of -45 °C.

The procedure of Example 4 was repeated with the difference that the poly(propene oxide) with a molecular weight of about 400 was replaced by a two-third molar amount of a tris-amino capped poly(propene oxide) having a molecular weight of about 3000 (available under the trademark JEFFAMINE T3000).

Another sample of the furanized polymer was mixed at 40 °C with such a quantity of the so-obtained tris-maleimido capped poly(propene oxide) that the molar ratio of the 2,5-dialkylfuran groups to the maleimido groups was 1:1. The liquid mixture was poured into a mould and allowed to stand overnight. In DMA (heating rate 2 °C/minute) it showed an onset temperature of the glass transition of -41 °C.

### Example 16

A purchased sample (0.76 g) of dimethyl 1,4-dimethyl-1,4-epoxycylohexa-2,5-diene-2,3-dicarboxylate (i.e. the Diels-Alder adduct of dimethyl acetylenedicarboxylate and 2,5-dimethylfuran) was heated at 180 °C for 15 minutes in a nitrogen atmosphere. Volatile decomposition products were collected in a cold trap (-80 °C). By ¹H-NMR and ¹³C-NMR analyses it was established that the trapped volatile reaction product was substantially 2,5-dimethylfuran and that the residue substantially contained unconverted starting material and dimethyl acetylenedicarboxylate. Acetylene and dimethyl 2,5-dimethylfurane-3,4-dicarboxylate were not detected.

This experiment shows that a Diels-Alder adduct of a 2,5-dialkylfuran and an alkyne with electron withdrawing groups attached to both sides of the ethyne moiety reverses upon heating to the 2,5-dialkylfuran and the alkyne. The temperature level needed for the Diels-Alder reaction and for the revers reaction fits with suitable temperature ranges applied in (re-)moulding operations. Surprisingly, the other possible reverse reaction, i.e. to acetylene and a 3,4-dicarboxy substituted 2,5-dialkylfuran, appears not to occur. Hence, alkynes having electron withdrawing groups attached to both sides of the ethyne moiety are suitable dienophiles for use in this invention.

## Claims

1. A cross-linked resin of which the cross-linking can be reversed by heating at elevated temperature, which resin comprises polymer chains which are connected to one another via Diels-Alder adducts obtainable from a dienophile and a diene, the latter being a 2,5-dialkyl substituted furan.

2. A resin as claimed in claim 1, characterized in that it is re-mouldable in a temperature range of 110-250 °C, in particular 140-220 °C.

3. A resin as claimed in claim 1 or 2, characterized in that the dienophile is an alkyne having electron withdrawing groups attached to both sides of the ethyne moiety, or comprises a but-2-ene-1,4-dione moiety included in a 5- or 6-membered ring.

4. A resin as claimed in claim 3, characterized in that the dienophile is a cyclic derivatives of maleic anhydride, in particular a maleimide.

5. A resin as claimed in any of claims 1-4, characterized in that it is obtainable from a polymer which contains moieties of a 2,5-dialkyl substituted furan and a cross-linking agent which contains two or more dienophiles in its molecular structure.

6. A resin as claimed in claim 5, characterized in that the cross-linking agent is selected from the group consisting of
- maleimido capped poly(alkylene oxide)s,
- maleimido capped (poly)siloxanes, and
- tris- and bis-maleimides in which the maleimide groups are connected to one another by chemical bonds or by bridging groups which have a (number average) molecular weight below 500 or which have up to 20 carbon atoms in the connecting bridge(s).

7. A resin as claimed in claim 5 or 6, characterized in that the polymer which contains moieties of a 2,5-dialkyl substituted furan is obtainable by furanizing a copolymer of carbon monoxide and olefinically unsaturated compounds which contains 1,4-dicarbonyl entities in their polymer chains, preferably an alternating copolymer of carbon monoxide and the olefinically unsaturated compounds.

8. A resin as claimed in claim 7, characterized in that the olefinically unsaturated compounds are aliphatic α-olefins, in particular propene.

9. A resin as claimed in any of claims 1-8, characterized in that the polymer from which it is obtainable has a number average molecular weight in the range of 1,000-25,000, in particular in the range of 2,000-10,000.

10. A resin as claimed in any of claims 1-9, characterized in that it is obtainable by applying the 2,5-dialkyl substituted furan groups and the dienophiles in a molar ratio of from 10:1 to 1:2, in particular from 5:1 to 1:1.5.

11. A cross-linking agent, characterized in that it is selected from maleimido capped poly(alkylene oxide)s, and bis-maleimides of (poly)siloxanes of the general formula H₂N-CH₂[-O-SiR₂]ₙ-O-CH₂-NH₂, wherein n is an integer of at least 1 and each R is independently an alkyl group, in particular having up to 5 carbon atoms.

12. A composition which is suitable for the preparation of a cross-linked resin of which the cross-linking can be reversed by heating at elevated temperature which composition comprises a polymer which contains moieties of a 2,5-dialkyl substituted furan and a cross-linking agent which contains two or more dienophiles in its molecular structure.

13. A composition which is suitable for the preparation of a cross-linked resin of which the cross-linking can be reversed by heating at elevated temperature which composition comprises a polymer which contains moieties of a dienophile and a cross-linking agent which contains two or more 2,5-dialkyl substituted furans in its molecular structure.

14. A polymer which is suitable for the preparation of a cross-linked resin of which the cross-linking can be reversed by heating at elevated temperature which polymer contains moieties of a 2,5-dialkyl substituted furan and moieties of a dienophile.

15. A kit of parts which is suitable for the preparation of a cross-linked resin of which the cross-linking can be reversed by heating at elevated temperature, characterized in that it comprises a first part comprising a polymer which contains moieties of a 2,5-dialkyl substituted furan and a second part of the kit comprising a cross-linking agent which contains two or more dienophiles in its molecular structure.

16. A kit of parts which is suitable for the preparation of a cross-linked resin of which the cross-linking can be reversed by heating at elevated temperature, characterized in that it comprises a first part comprising a polymer which contains moieties of a dienophile and a second part comprising a cross-linking agent which contains two or more 2,5-dialkyl substituted furans in its molecular structure.

17. A composition which comprises a polymer containing moieties of a 2,5-dialkyl substituted furan as defined in claim 7, and a buffer having a pH in the range of 2-7 (when measured in water at 20 °C) or an acid having a pKa in the range of 2-7 (when measured in water at 20 °C).

18. A process for re-moulding a cross-linked resin comprising heating a resin as claimed in claim 1 at a temperature which is sufficiently high to convert it into a liquid, moulding the obtained liquid into the desired shape and cooling to a temperature which is sufficiently low to solidify the resin.

## Patentansprüche

1. Vernetztes Harz, dessen Vernetzung durch Erhitzen auf erhöhte Temperatur aufgehoben werden kann, welches Harz Polymerketten enthält, die untereinander über aus einem Dienophil und einem Dien erhältliche Diels-Alder-Addukte verbunden sind, wobei es sich bei dem Dien um ein 2,5-Dialkyl-substituiertes Furan handelt.

2. Harz nach Anspruch 1, dadurch gekennzeichnet, daß es in einem Temperaturbereich von 110-250°C, insbesondere 140-220°C wieder verformbar ist.

3. Harz nach Anspruch 1 oder 2, dadurch gekennzeichnet, daß das Dienophil ein Alkin ist, das an beiden Seiten des Ethinrestes elektronenabziehende Gruppen gebunden aufweist oder einen But-2-en-1,4-dion-Rest umfaßt, der in einem 5- oder 6-gliedrigen Ring enthalten ist.

4. Harz nach Anspruch 3, dadurch gekennzeichnet, daß das Dienophil ein cyclisches Derivat von Maleinsäureanhydrid ist, insbesondere ein Maleimid.

5. Harz nach einem der Ansprüche 1 bis 4, dadurch gekennzeichnet, daß es aus einem Polymer, das Reste eines 2,5-Dialkyl-substituierten Furans enthält, und aus einem Vernetzungsmittel, das in seiner Molekularstruktur zwei oder mehrere Dienophile enthält, erhältlich ist.

6. Harz nach Anspruch 5, dadurch gekennzeichnet, daß das Vernetzungsmittel aus der Gruppe ausgewählt ist, die aus
- Maleimido-verkappten Poly(alkylenoxiden),
- Maleimido-verkappten (Poly)siloxanen und
- Tris- und Bis-maleimiden besteht, worin die Maleimidgruppen durch chemische Bindungen oder durch Brückengruppen, die ein (zahlenmittleres) Molekulargewicht unter 500 aufweisen oder die bis zu 20 Kohlenstoffatome in der Verbindungsbrücke bzw. in den Verbindungsbrücken haben, miteinander verbunden sind.

7. Harz nach Anspruch 5 oder 6, dadurch gekennzeichnet, daß das Polymer, das Reste eines 2,5-Dialkyl-substituierten Furans enthält, durch Furanisieren eines Copolymers aus Kohlenmonoxid und olefinisch ungesättigten Verbindungen, das in seiner Polymerkette 1,4-Dicarbonylreste enthält, vorzugsweise eines alternierenden Copolymers aus Kohlenmonoxid und den olefinisch ungesättigten Verbindungen, erhältlich ist.

8. Harz nach Anspruch 7, dadurch gekennzeichnet, daß die olefinisch ungesättigten Verbindungen aliphatische α-Olefine sind, insbesondere Propen.

9. Harz nach einem der Ansprüche 1 bis 8, dadurch gekennzeichnet, daß das Polymer, aus dem es erhältlich ist, ein zahlenmittleres Molekulargewicht im Bereich von 1.000 bis 25.000, insbesondere im Bereich von 2.000 bis 10.000 aufweist.

10. Harz nach einem der Ansprüche 1 bis 9, dadurch gekennzeichnet, daß es durch Anwenden der 2,5-Dialkyl-substituierten Furangruppen und der Dienophile in einem Molverhältnis von 10:1 bis 1:2, insbesondere von 5:1 bis 1:1,5, erhältlich ist.

11. Vernetzungsmittel, dadurch gekennzeichnet, daß es unter Maleimido-verkappten Poly(alkylenoxiden) und Bis-Maleimiden von (Poly)siloxanen mit der allgemeinen Formel H₂N-CH₂[-O-SiR₂]ₙ-O-CH₂-NH₂ ausgewählt ist, in welcher Formel n eine ganze Zahl von wenigstens 1 bedeutet und jeder Rest R unabhängig eine Alkylgruppe darstellt, insbesondere eine Alkylgruppe mit bis zu 5 Kohlenstoffatomen.

12. Zur Herstellung eines vernetzten Harzes geeignete Zusammensetzung, in welchem Harz die Vernetzung durch Erhitzen auf erhöhte Temperatur aufgehoben werden kann, welche Zusammensetzung ein Polymer, das Reste eines 2,5-Dialkylsubstituierten Furans enthält, und ein Vernetzungsmittel umfaßt, das zwei oder mehrere Dienophile in seiner Molekularstruktur enthält.

13. Zur Herstellung eines vernetzten Harzes geeignete Zusammensetzung, in welchem Harz die Vernetzung durch Erhitzen auf erhöhte Temperatur aufgehoben werden kann, welche Zusammensetzung ein Polymer, das Reste eines Dienophils enthält, und ein Vernetzungsmittel umfaßt, das in seiner Molekularstruktur zwei oder mehrere 2,5-Dialkyl-substituierte Furane enthält.

14. Zur Herstellung eines vernetzten Harzes geeignetes Polymer, in welchem Harz die Vernetzung durch Erhitzen auf erhöhte Temperatur aufgehoben werden kann, welches Polymer Reste eines 2,5-Dialkyl-substituierten Furans und Reste eines Dienophils enthält.

15. Zur Herstellung eines vernetzten Harzes geeigneter Teilesatz, in welchem Harz die Vernetzung durch Erhitzen auf erhöhte Temperatur aufgehoben werden kann, dadurch gekennzeichnet, daß er einen ersten Teil umfaßt, der ein Polymer enthält, das Reste eines 2,5-Dialkyl-substituierten Furans enthält, und einen zweiten Teil des Satzes umfaßt, der ein Vernetzungsmittel enthält, das in seiner Molekularstruktur zwei oder mehrere Dienophile aufweist.

16. Zur Herstellung eines vernetzten Harzes geeigneter Teilesatz, in welchem Harz die Vernetzung durch Erhitzen auf erhöhte Temperatur aufgehoben werden kann, dadurch gekennzeichnet, daß er einen ersten Teil umfaßt, der ein Polymer enthält, das Reste eines Dienophils aufweist, und einen zweiten Teil umfaßt, der ein Vernetzungsmittel enthält, das in seiner Molekularstruktur zwei oder mehrere 2,5-Dialkyl-substituierte Furane enthält.

17. Zusammensetzung, die ein Polymer, das Reste eines 2,5-Dialkyl-substituierten Furans, wie in Anspruch 7 definiert, enthält, und einen Puffer mit einem pH im Bereich von 2 bis 7 (bestimmt in Wasser bei 20°C) oder eine Säure mit einem pKa-Wert im Bereich von 2 bis 7 (bestimmt in Wasser bei 20°C) umfaßt.

18. Verfahren zum Wiederverformen eines vernetzen Harzes, das ein Erhitzen eines Harzes, wie in Anspruch 1 beansprucht, auf eine Temperatur, die ausreichend hoch ist, um es in eine Flüssigkeit überzuführen, ein Verformen der erhaltenen Flüssigkeit zu der gewünschten Form und ein Abkühlen auf eine Temperatur, die zum Verfestigen des Harzes ausreichend niedrig ist, umfaßt.

## Revendications

1. Résine réticulée dont la réticulation peut être inversée en chauffant à température élevée, laquelle résine comprend des chaînes de polymère qui sont reliées l'une à l'autre via des produits d'addition de Diels-Alder obtenables à partir d'un diénophile et d'un diène, ce dernier étant un furanne substitué par du 2,5-dialkyle.

2. Résine suivant la revendication 1, caractérisée en ce qu'elle est remoulable dans un intervalle de températures de 110-250°C, en particulier de 140-220°C.

3. Résine suivant l'une ou l'autre des revendications 1 et 2, caractérisée en ce que le diénophile est un alcyne comportant des groupes électroattractifs attachés des deux côtés du fragment éthyne, ou comprend un fragment but-2-ène-1,4-dione inclus dans un cycle à 5 ou 6 chaînons.

4. Résine suivant la revendication 3, caractérisée en ce que le diénophile est un dérivé cyclique d'anhydride maléique, en particulier un maléimide.

5. Résine suivant l'une quelconque des revendications 1 à 4, caractérisée en ce qu'elle est obtenable à partir d'un polymère qui contient des fragments d'un furanne substitué par du 2,5-dialkyle et d'un agent de réticulation qui contient deux ou plusieurs diénophiles dans sa structure moléculaire.

6. Résine suivant la revendication 5, caractérisée en ce que l'agent de réticulation est choisi dans le groupe comprenant :
- les poly(oxydes d'alkyléne) coiffés de maléimido,
- les (poly)siloxanes coiffés de maléimido, et
- les tris- et bis-maléimides dans lesquels les groupes maléimide sont reliés l'un à l'autre par des liaisons chimiques ou par des groupes de pontage qui ont un poids moléculaire (moyen numérique) en dessous de 500 et qui comportent jusqu'à 20 atomes de carbone dans le ou les ponts de liaison.

7. Résine suivant l'une ou l'autre des revendications 5 et 6, caractérisée en ce que le polymère qui contient des fragments d'un furanne substitué par du 2,5-dialkyle est obtenable en furannisant un copolymère de monoxyde de carbone et de composés oléfiniquement insaturés qui contient des fonctions 1,4-dicarbonyle dans leurs chaînes de polymère, avantageusement un polymère alterné de monoxyde de carbone et des composés oléfiniquement insaturés.

8. Résine suivant la revendication 7, caractérisée en ce que les composés oléfiniquement insaturés sont des α-oléfines aliphatiques, en particulier du propène.

9. Résine suivant l'une quelconque des revendications 1 à 8, caractérisée en ce que le polymère à partir duquel elle est obtenable a un poids moléculaire moyen numérique dans la gamme de 1.000-25.000, en particulier dans la gamme de 2.000-10.000.

10. Résine suivant l'une quelconque des revendications 1 à 9, caractérisé en ce qu'elle est obtenable en appliquant les groupes furanne substitués par du 2,5-dialkyle et les diénophiles dans un rapport molaire de 10/1 à 1/2, en particulier de 5/1 à 1/1,5.

11. Agent de réticulation, caractérisé en ce qu'il est choisi parmi les poly(oxydes d'alkylène) coiffés de maléimido et les bis-maléimides de (poly)siloxanes de la formule générale H₂N-CH₂[-O-SiR₂]ₙ-O-CH₂-NH₂, dans laquelle n est un nombre entier d'au moins 1 et chaque R représente indépendamment un groupe alkyle, en particulier comportant jusqu'à 5 atomes de carbone.

12. Composition qui convient pour la préparation d'une résine réticulée dont la réticulation a été inversée par chauffage à température élevée, laquelle composition comprend un polymère qui contient des fragments d'un furanne substitué par du 2,5-dialkyle et un agent de réticulation qui contient deux ou plusieurs diénophiles dans sa structure moléculaire.

13. Composition qui convient pour la préparation d'une résine réticulée dont la réticulation peut être inversée par chauffage à température élevée, laquelle composition comprend un polymère qui contient des fragments d'un diénophile et un agent de réticulation qui contient deux ou plusieurs furannes substitués par du 2,5-dialkyle dans sa structure moléculaire.

14. Polymère qui convient pour la préparation d'une résine réticulée dont la réticulation peut être inversée par chauffage à température élevée, lequel polymère contient des fragments d'un furanne substitué par du 2,5-dialkyle et des fragments d'un diénophile.

15. Trousse d'éléments qui convient pour la préparation d'une résine réticulée dont la réticulation peut être inversée par chauffage à température élevée, caractérisée en ce qu'elle comprend un premier élément comprenant un polymère qui contient des fragments d'un furanne substitué par du 2,5-dialkyle et un second élément de la trousse comprenant un agent de réticulation qui contient deux ou plusieurs diénophiles dans sa structure moléculaire.

16. Trousse d'éléments qui convient pour la préparation d'une résine réticulée dont la réticulation peut être inversée par chauffage à température élevée, caractérisée en ce qu'elle comprend un premier élément comprenant un polymère qui contient des fragments d'un diénophile et un second élément comprenant un agent de réticulation qui contient deux ou plusieurs furannes substitués par du 2,5-dialkyle dans sa structure moléculaire.

17. Composition qui comprend un polymère contenant des fragments d'un furanne substitué par du 2,5-dialkyle suivant la revendication 7, et un tampon ayant un pH dans la gamme de 2-7 (lorsque mesuré dans de l'eau à 20°C) ou un acide ayant un pKa dans la gamme de 2-7 (lorsque mesuré dans de l'eau à 20°C).

18. Procédé de remoulage d'une résine réticulée comprenant le chauffage d'une résine suivant la revendication 1 à une température qui est suffisamment élevée pour la convertir en un liquide, le moulage du liquide obtenu à la forme désirée et le refroidissement à une température qui est suffisamment basse pour solidifier la résine.
